# EUROPÄISCHE PATENTANMELDUNG

(11) **EP 2 853 379 A2**
(43) Veröffentlichungstag der Anmeldung: **01.04.2015**
(21) Anmeldenummer: 14176233.6
(22) Anmeldetag: 09.07.2014
(51) Int. Cl.: B29C 65/24, B29C 65/18, B29C 65/16

(54) **Laserbeheizte Siegelvorrichtung**

(30) Priorität: 09.09.2013 DE 102013217996
(71) Anmelder: Rovema GmbH, 35463 Fernwald-Annerod (DE)
(72) Erfinder: Lutz, Erhard, 35325 Mücke (DE)
(74) Vertreter: advotec.

(57) **Zusammenfassung**

Siegelvorrichtung sowie ein Verfahren zum Verschweißen zweier überlappender Folienabschnitte mit einer bewegbaren Schweißbacke (01), welche (01) zumindest ein auf der zu den Folienabschnitten weisenden Seite an einem Druckkörper (08) angeordnetes Heizelement (03, 04) umfasst. Das Heizelement (03, 04) wird hierbei von einem von einer Laserquelle emittierten Laserstahl (11) aufgeheizt. Anstelle von Ausnehmungen im Druckkörper (08) ist dieser (08) für den Laserstrahl (11) transparent ausgeführt und weist hierdurch eine verbesserte Stabilität auf. Folienbeutel, aus einem Folienschlauch hergestellt, bei dem die obere Siegelnaht in mehrere beabstandete Abschnitte unterteilt ist und der nicht verschweißte zwischenliegende Bereich eine Art Labyrinth bildet ist auch offenbart.

## Beschreibung

Die Erfindung betrifft eine Siegelvorrichtung zum Verschweißen zweier überlappender Folienabschnitte mit einer Schweißbacke, welche ein von einem Laserstrahl beheizbares Heizelement umfasst, gemäß dem Oberbegriff des Anspruchs 1, ein Verfahren zum Verschweißen von überlappenden Folienabschnitten mittels erfindungsgemäßer Siegelvorrichtung sowie ein aus einem Folienschlauch hergestellter Folienbeutel.

Aus dem Stand der Technik sind verschiedene Siegelvorrichtungen zum Verschweißen von überlappenden Folienabschnitten bekannt. Grundsätzlich bedarf es der Einbringung der erforderlichen Wärme zum An- bzw. Aufschmelzen der zu verbindenden Folienabschnitte im Bereich der Siegelnaht. Die hierzu regulär eingesetzten Heizelemente dienen jedoch zur Gewährleistung der einwandfreien Siegelnaht und insbesondere des schadfreien Übergangs zu den unverschweißten Bereichen um bei jedem Zyklus wiederum abzukühlen. Insbesondere größere Massen der temperierten Heizelemente führen zu einem hohen Energieverbrauch und zu einer Einschränkung hinsichtlich der erforderlichen Zykluszeit.

Zur Reduzierung des Energieverbrauchs wird daher in der Druckschrift DE 197 46 402 A1 vorgeschlagen, die notwendige Schweißwärme durch den Einsatz eines Lasers bei deutlich reduzierter zu temperierender Masse des Heizelements zu erzeugen. Hierzu werden an der zu den Folienabschnitten weisenden Seite der Schweißbacken dünne Begrenzungswandungen eingesetzt, welche direkt mittels Laserdioden beheizt werden. Zur Erwärmung des Heizelements über deren gesamte Breite weist die Schweißbacke einen Längsspalt auf, so dass die Laserstrahlen unmittelbar ohne weitere Hindernisse von der verschiebbaren Laserdiode auf die dünne Begrenzungswandung treffen können. Somit wird eine lokale schnelle Erwärmung der Begrenzungswandung zum Aufschmelzen der überlappenden Folienabschnitte ermöglicht.

Nachteilig bei einer derartigen Ausführungsform ist es jedoch, dass die Schweißbacke aufgrund des sich über die Breite der Schweißbacke erstreckenden Längsspalts und der relativ dünnen die beiden Seiten des Längsspalts verbindenden Begrenzungswandungen relativ instabil ist, und die Herstellung und Handhabung der Schweißbacke aufgrund deren Labilität einen besonders sorgfältigen Umgang erfordert.

Aufgabe der vorliegenden Erfindung ist es daher, eine Siegelvorrichtung zur Verfügung zu stellen, welche mittels Laserstrahlen beheizt werden kann, jedoch die Nachteile der bekannten Ausführungsform vermeidet.

Die gestellte Aufgabe wird durch eine erfindungsgemäße Ausführungsform nach der Lehre des Anspruchs 1 sowie durch ein erfindungsgemäßes Verfahren nach der Lehre des Anspruchs 14 gelöst.

Ein in Verbindung mit der erfindungsgemäßen Siegelvorrichtung neu geschaffener erfindungsgemäßer Folienbeutel ist in Anspruch 16 angegeben.

Vorteilhafte Ausführungsformen der Erfindung sind Gegenstand der Unteransprüche.

Die gattungsgemäße Siegelvorrichtung zum Verschweißen zweier überlappender Folienabschnitte umfasst zunächst eine Schweißbacke und einen gegenüberliegenden Widerstand. Das Verschweißen der Folienabschnitte erfolgt bei einer Pressung der Folienabschnitte zwischen der Schweißbacke und dem Widerstand, wozu die Schweißbacke mittels eines Backenantriebs auf den Widerstand zu- und davon wegbewegt werden kann.

Die Schweißbacke weist einen Druckkörper und ein Heizelement auf, wobei das Heizelement auf der zu den Folienabschnitten weisenden Seite am Druckkörper angeordnet ist. Bei Verwendung der Siegelvorrichtung wird die vom Backenantrieb in die Schweißbacke eingeleitete Druckkraft durch den Druckkörper auf das Heizelement übertragen, welches seinerseits eine Pressung des anliegenden zu verschweißenden Folienabschnitts bewirkt. Weiterhin bedarf es zum Verschweißen der Folienabschnitte einer Heizeinrichtung, welche in diesem gattungsgemäßen Fall zumindest eine Laserstrahl emittierende Laserquelle und das Heizelement umfasst, wobei das Heizelement zur Aufheizung desselben den Laserstrahl absorbieren kann. Nicht erforderlich ist es hierbei, dass das Heizelement die gesamte vom Laserstrahl übermittelte Heizleistung absorbiert, sondern vielmehr gilt es, bei der Realisierung einen hohen Wirkungsgrads zu erzielen, bei dem ein entsprechender Anteil der vom Laserstrahl übermittelten Heizleistung im Heizelement in Wärmeenergie umgesetzt wird. Durch das Auftreffen des Laserstrahls auf das Heizelement in einem Auftreffpunkt wird das Heizelement an der entsprechenden Stelle erwärmt. Die Ausdehnung des Auftreffpunkts bestimmt sich hierbei anhand der Ausdehnung des Laserstrahls beim Auftreffen auf das Heizelement, wobei sich eine Einflusszone im Bereich um den Auftreffpunkt mit einer Erwärmung des Heizelements sich hierbei insbesondere nach der Wärmeleitfähigkeit des Heizelements richtet. Im Verhältnis zur Breite des Heizelements wird vom einzelnen Laserstrahl gattungsgemäß jedoch lediglich ein kurzer Bereich um den Auftreffpunkt nennenswert erwärmt.

Erfindungsgemäß ist nunmehr vorgesehen, dass anstelle des durchgehend von einem Längsspalt unterteilten Druckkörpers ein für den Laserstrahl transparenter Druckkörper eingesetzt wird, welcher entsprechend im Strahlengang des Laserstrahl angeordnet ist. Das heißt, dass durch den Druckkörper nicht nur die vom Backenantrieb zur Pressung der Folienabschnitte aufgebrachten Druckkräfte übertragen werden, sondern ebenso die Laserstrahlen den Druckkörper auf dem Weg von der Laserquelle zum Auftreffpunkt am Heizelement durchqueren.

Durch die erfindungsgemäße Ausführungsform ist es gelungen, die Anfälligkeit gegen Beschädigung der bisherigen Ausführungsform deutlich zu reduzieren, da nunmehr keine bruchgefährdete Schwachstelle vorhanden ist.

Bei einer vorteilhaften Siegeleinrichtung wird das Widerstandselement gleichfalls wie die Schweißbacke gegenläufig auf die Schweißbacke zu-und davon wegbewegt. Besonders vorteilhaft ist es jedoch, wenn die Siegelvorrichtung zwei gegenläufig aufeinander zu- und voneinander wegbewegbare Schweißbacken umfasst, welche jeweils zumindest ein erwärmbares Heizelement aufweisen. Hierbei ist es des Weiteren besonders vorteilhaft, wenn die Heizelemente der beiden sich gegenüberliegenden Schweißbacken mittels Laserstrahlen beheizt werden können und hierzu ein für Laserstrahlen transparenter Druckkörper eingesetzt wird.

Zur Reduzierung der temperierten Massen mit einer Erwärmung des Heizelements ist es vorteilhaft, wenn die Materialstärke des Heizelements geringer als 2 mm ist. Besonders vorteilhaft ist hierbei eine Materialstärke von unter 0,5 mm, so dass die Wärmekapazität des Heizelements auf einen sehr geringen Wert begrenzt werden kann. Hiermit wird eine schnelle Aufheizung und Abkühlung des Heizelements realisierbar.

Zur Reduzierung des Energieverbrauchs und insbesondere zur Verbesserung des Schweißprozesses mit einer Aufheizung und Abkühlung des

Heizelements ist es besonders vorteilhaft, wenn die Wärmeleitfähigkeit des Druckkörpers zumindest um den Faktor 10, insbesondere zumindest um den Faktor 20 geringer ist als die Wärmeleitfähigkeit des Heizelements. Hierdurch wird im Wesentlichen sichergestellt, dass beim Aufheizen des Heizelements durch die für den Druckkörper transparenten Laserstrahlen lediglich das Heizelement der Temperaturänderung unterliegt, während hingegen der Druckkörper hiervon weitgehend unbeeinflusst ist. Somit bedarf es keiner Temperierung unnötiger Werkzeugmassen, so dass der Energieverbrauch gesenkt und der Schweißprozess verbessert werden kann. In bekannter Ausführung aus dem Stand der Technik unter Verwendung eines durch Längsspalt geteilten Werkzeugs bewirkt die Aufheizung der dünnen Verbindungsstelle unvermindert eine Temperierung der beidseitigen hohen Werkzeugmassen mit hoher Wärmeleitfähigkeit, wodurch es zu einem unnötigen Energieverlust kommt.

Zur Realisierung einer Verschweißung der überlappenden Folienabschnitte über die Breite der Schweißbacke ist es besonders vorteilhaft, wenn der Auftreffpunkt des Laserstrahls auf dem Heizelement mittels einer Positionierungseinrichtung verstellbar ist. In welcher Art die Verstellung des Auftreffpunkts realisiert wird, ist hierbei zunächst unerheblich, wobei sowohl die Position und/oder die Ausrichtung der Laserquelle verändert werden kann, wie auch in besonders vorteilhafter Weise der Strahlengang des Laserstrahls zwischen Laserquelle und Auftreffpunkt durch die Positionierungseinrichtung beeinflussbar ist.

Hierbei weist die besonders vorteilhafte Ausführungsform der Positionierungseinrichtung einen schwenkbar und/oder verschiebbar an der Schweißbacke gelagerten Umlenkspiegel bzw. ein schwenkbar und/oder verschiebbar an der Schweißbacke gelagertes Umlenkprisma auf. Die Wahl bezüglich des Umlenkspiegels und/oder Umlenkprismas richtet sich insbesondere nach den Möglichkeiten hinsichtlich des Verlaufs des Strahlengangs in der Schweißbacke, d.h. inwieweit Umlenkungen und somit vorteilhaft Umlenkspiegel oder Ablenkungen und somit vorteilhaft Umlenkprismen unter Berücksichtigung des für den Strahlengang notwendigen Platzbedarfs erforderlich bzw. möglich sind.

Eine besonders vorteilhafte Ausführungsform, um die Positionierung des Auftreffpunkts des Laserstrahls auf dem Heizelement über die gesamte Breite des Heizelements zu ermöglichen, umfasst dies hierbei einen um eine Querachse schwenkbar gelagerten Umlenkspiegel, welcher des Weiteren in Richtung der Querachse durch eine Stelleinrichtung verstellbar ist. Die Orientierung der Querachse entspricht der Richtung der Breite des Heizelements. Bei dieser Konstellation wird es ermöglicht, die Laserquelle an einem festen Ort, beispielsweise einseitig an der Schweißbacke zu positionieren und lediglich mittels Verstellung des Umlenkspiegels den Strahlengang des Laserstrahls unter Verstellung des Auftreffpunkts zu beeinflussen. Somit kann die gesamte zum Druckkörper weisende Fläche des Heizelements vom Laserstrahl überdeckt werden. Besonderer Vorteil in dieser Ausführung sind die lediglich geringen zu bewegenden und zu positionierenden Massen des Umlenkspiegels. Gleiches gilt für die Verwendung eines Umlenkprismas. Sofern eine hinreichende Erwärmung über die Höhe des Heizelements bei beispielsweise mittig am Heizelement angeordnetem Auftreffpunkt erzielt wird, kann naheliegend in vorteilhafter Weise auf eine Schwenkung um die Querachse verzichtet werden, so dass vorteilhaft lediglich eine Verstellung entlang der Querachse einzusetzen ist.

Alternativ zur Verstellung des Strahlengangs des Laserstrahls durch einen Umlenkspiegel und/oder ein Umlenkprisma ist es jedoch ebenso möglich die Laserquelle mittels der Positionierungseinrichtung zu verstellen. Hierbei kann die Laserquelle schwenkbar und/oder verschiebbar an der Schweißbacke gelagert werden. Hierzu kann beispielsweise die Laserquelle unmittelbar über die Breite des Heizelements verschiebbar sein.

In den üblichen Anwendungsbereichen einer entsprechenden Siegelvorrichtung wird nach dem Verschweißen der überlappenden Folienabschnitte eine Trennung zwischen einer oberen Schweißnaht und einer unteren Schweißnaht erforderlich, so dass beispielsweise getrennte Beutel gebildet werden. Da im Bereich der Trennung keine Schweißnaht erforderlich ist, weist die vorteilhafte Siegelvorrichtung zumindest zwei beabstandete Heizelemente auf, welche eine obere Schweißnaht und eine beabstandete untere Schweißnaht erzeugen können. Hierbei ist es vorteilhaft, wenn die Heizelemente zusammen an einem Druckkörper angeordnet sind.

Eine besonders vorteilhafte Ausführungsform der Siegelvorrichtung wird geschaffen, wenn der Druckkörper derart ausgeführt ist, dass dieser das Heizelement seitlich überragt und/oder das Heizelement Aussparungen aufweist, welche vom Druckkörper überdeckt werden. Somit werden am Druckkörper zu den Folienabschnitten weisende Bereiche geschaffen, welche unmittelbar von einem den Druckkörper durchdringenden Laserstrahl zugänglich sind. Das heißt, abseits des Heizelements kann der Laserstrahl direkt auf die Folienabschnitte gelenkt werden. Durch diese Ausführungsform wird ein Laserschneiden der Folienabschnitte ermöglicht, so dass ein nachfolgender Bearbeitungsschritt zum Trennen oder Ausschneiden der Folienabschnitte entfallen kann.

Wenngleich in vorteilhafter Ausführung der Druckkörper eine geringe Wärmeleitfähigkeit aufweist, ist es jedoch unvermindert vorteilhaft, wenn der Druckkörper eine Kühleinrichtung umfasst. Hierzu können beispielsweise Fluid führende Kühlmittelkanäle im Druckkörper eingearbeitet sein. Im einfachsten Fall wären Lüftungsbohrungen im Druckkörper anzubringen.

Zur Verhinderung einer Überhitzung des Heizelements und einer Schädigung der Folienabschnitte und/oder des Druckkörpers weist die vorteilhafte Siegelvorrichtung in vorteilhafter Ausführungsform eine Temperaturmesseinrichtung auf, welche eine Temperatur des Heizelements ermitteln kann. Hierbei kann sowohl vorgesehen sein, dass eine örtliche Temperatur des Heizelements beispielsweise am Auftreffpunkt ermittelt wird, als auch eine durchschnittliche Temperatur bzw. repräsentative Temperatur ohne Bestimmung der exakten Temperatur des Heizelements.

Zur Realisierung der Temperaturmesseinrichtung kann in einer vorteilhaften Ausführungsform ein in der Schweißbacke angeordneter temperaturabhängiger elektrischer Widerstand eingesetzt werden. Hierbei kann sowohl das Heizelement selber als temperaturabhängiger elektrischer Widerstand genutzt werden, als auch beispielsweise parallel zum Heizelement verlaufende Messmittel angeordnet werden können. In Abhängigkeit der Temperaturabhängigkeit des Messmittels kann eine kritische Temperatur des Heizelements, beispielsweise bei deutlich ansteigendem elektrischem Widerstand, rechtzeitig erkannt werden.

In alternativer bzw. ergänzender Ausführungsform ist es jedoch besonders vorteilhaft, wenn als Temperaturmesseinrichtung ein Wärmestrahlungsmessgerät eingesetzt wird. Hierbei kann die vom Heizelement abgegebene Wärmestrahlung ermittelt werden, wobei hierzu die durch den Druckkörper zurücklaufende Wärmestrahlung erfasst wird. Wenngleich ebenso wie beim Einsatz eines elektrischen Widerstandsmessmittels keine exakten Temperaturen ermittelbar sind, ist jedoch die Erkennung einer Überhitzung des Heizelements hinreichend feststellbar. Weiterhin kann durch die Auswertung der gemessenen Wärmestrahlung der tatsächliche Eintrag von Wärmeenergie auf das Heizelement im Auftreffpunkt ermittelt und somit die zuverlässige Verschweißung sichergestellt werden.

Zur Beschleunigung des Schweißprozesses und insbesondere zur Reduzierung der erforderlichen Leistung einer Laserquelle sowie zur Reduzierung des Stellbereichs einer eingesetzten Positionierungseinrichtung ist es besonders vorteilhaft, wenn die Heizeinrichtung eine Mehrzahl von Laserquellen umfasst. Hierbei ist es einerseits möglich, dass die Laserstrahlen der jeweiligen Laserquellen derart gelenkt werden, dass die Auftreffpunkte auf das Heizelement verteilt über die Breite des Heizelements angeordnet sind. Somit erfolgt eine gleichzeitige Verschweißung der überlappenden Folienabschnitte zugleich in beabstandeten Segmenten an den Folienabschnitten. Besonders vorteilhaft ist es jedoch, wenn bei zumindest zwei beabstandeten Heizelementen jedes der Heizelemente zumindest eine zugehörige Laserquelle mit zugehörigem Laserstrahl und dem entsprechenden Auftreffpunkt aufweist. Somit kann zugleich eine Verschweißung der überlappenden Folienabschnitte entlang beider Heizelemente erfolgen.

Zur Reduzierung der Materialstärke des Heizelements bei gleichzeitiger, gleichmäßiger Erwärmung des Heizelements ohne die Gefahr der Überhitzung des Heizelements am Auftreffpunkt ist es besonders vorteilhaft, wenn im Strahlengang vor dem Druckkörper eine Streulinse und/oder Blende angeordnet wird, welche den Laserstrahl zumindest in der Höhe aufweitet. In einer weiteren alternativen und/oder ergänzenden Ausführungsform wird im Druckkörper eine Streulinse realisiert, wobei der Druckkörper ebenso bei entsprechender Materialwahl und Gestaltung der Formen eine Streulinse bilden kann. Beispielsweise ist es möglich, den Druckkörper aus zwei verschiedenen Werkstoffen herzustellen, wobei bei entsprechender Materialwahl mit unterschiedlichen Lichtbrechungsfaktoren am Grenzübergang zwischen dem einen Material zum anderen Material des Druckkörpers durch eine entsprechende Formgebung der Grenzfläche eine Streulinse realisierbar wird.

Weiterhin betrifft die Erfindung ein erfindungsgemäßes Verfahren, wobei in Anlehnung an den bekannten Stand der Technik nunmehr eine zuvor beschriebene Ausführungsform einer Siegelvorrichtung eingesetzt wird. Hierbei wird gattungsgemäß zum Siegeln von überlappenden Folienabschnitten mittels zumindest einer Laserquelle ein Laserstrahl erzeugt. Dieser trifft in einem Auftreffpunkt auf zumindest ein Heizelement auf, wobei das Heizelement durch die weitgehende Absorption der vom Laserstrahl übermittelten Energie im Bereich des Auftreffpunkts lokal erwärmt wird. Zur Erzeugung einer Siegelnaht bei den überlappenden Folienabschnitten wird weiterhin der Strahlengang des Laserstrahls mittels zumindest einer Positionierungseinrichtung fortlaufend verändert in Folge dessen der Auftreffpunkt über das Heizelement wandert.

Die Verstellung des Strahlengangs kann - wie zuvor beschrieben-sowohl durch geeignete Umlenkmittel als auch durch die Verstellung der Laserquelle erfolgen. Das Heizelement befindet sich auf der zu den Folienabschnitten weisenden Seite der Schweißbacke an einem Druckkörper, wobei der Laserstrahl auf der von den Folienabschnitten wegweisenden Seite auf das Heizelement auftrifft.

Durch die neu geschaffene erfindungsgemäße Siegelvorrichtung werden vielfältige Ausführungsmöglichkeiten hinsichtlich des erfindungsgemäßen Verfahrens ermöglicht, wobei insbesondere der Verlauf des Auftreffpunktes ohne weiteres an verschiedene Anforderungen an die Siegelnaht angepasst werden kann.

In einer besonderen Verfahrensweise wird die Laserquelle intermittierend betrieben. D.h. dass der Laserstrahl nicht kontinuierlich abgegeben, sondern von temporären Abschnitten unterbrochen wird, in denen kein Laserstrahl ausgesendet wird. Gleichbedeutend ist es, wenn der Laserstrahl ausgehend von der Laserquelle derart abgelenkt oder abgeblendet oder abgedunkelt wird, dass dieser keinen Einfluss mehr auf das Heizelement und/oder die überlappenden Folienabschnitte ausüben kann.

Wesentlich ist bei dieser Betriebsweise, dass das Heizelement entsprechend dem mehrfach unterbrochenen Verlauf des Auftreffpunktes in mehreren getrennten Bereichen erhitzt wird, wobei zwischen den erhitzten Bereichen zumindest ein nicht erhitzter Bereich verbleibt. Besonders vorteilhaft ist es, wenn der nicht erhitzte Bereich die Siegelnaht durchquerend die Gestalt eines Labyrinthes annimmt.

Anzumerken ist, dass sich aufgrund der vorteilhaft guten Leitfähigkeit des Heizelements unweigerlich mit Erwärmung im Bereich des Auftreffpunktes eine gewisse Erwärmung auch noch im weiteren Abstand zum Auftreffpunkt einstellt. Die Trennung in erwärmte und nicht erwärmte Bereiche beim vorteilhaften Verfahren unterscheidet hierbei hinsichtlich der zum Verschweißen der überlappenden Folienabschnitte relevanten Temperatur. D.h. die erwärmten Bereiche ermöglichen ein Verschweißen der überlappenden Folienabschnitte, während hingegen der nicht erwärmte Bereich (wenngleich eine gewisse Temperaturerhöhung auftritt) keine hinreichende Wärmeenergie zum Verschweißen der Folienabschnitte aufweist (wenngleich das Folienmaterial auch in diesem Bereich erweichen kann).

Folienbeutel sind aus dem Stand der Technik in vielfältigen Varianten hinlänglich bekannt und insofern bedarf es keiner besonderen Beschreibung.

Hinsichtlich der erfindungsgemäßen Ausführungsform ist es lediglich gattungsgemäß relevant, dass der aus einem Folienschlauch, beispielsweise aus einer überlappenden zu einem Schlauch umgeformten und längsverschweißten Folie oder im Extrusionsverfahren hergestellt, eine untere luftdichte Siegelnaht und eine obere zumindest abschnittsweise luftdichte Siegelnaht aufweist.

Theoretisch ist es im Rahmen der Erfindung ebenso denkbar, die untere Siegelnaht in gleicher Art wie die obere Siegelnaht auszuführen, jedoch ist deren praktische Bedeutung gering.

Erfindungsgemäß wird eine neue Ausführungsform eines Folienbeutels geschaffen, in dem die obere Siegelnaht in mehrere Abschnitte unterteilt ist, wobei der zumindest eine zwischen den verschweißten Abschnitten liegende Bereich die Gestalt eines Labyrinth aufweist. In Abhängigkeit von den Materialeigenschaften des Folienschlauchs sind die Abstände zwischen den verschweißten Bereichen, d.h. die Breite des unverschweißten Bereichs sowie die Gestaltung des Labyrinths derart auszuführen, dass Luft ohne weiteres (wenngleich mit geringer Geschwindigkeit) entweichen kann, jedoch der Inhalt des Folienbeutels zurückgehalten wird. Besteht der Inhalt aus einem Feststoff, so ist ein Entweichen aus dem Folienbeutel durch das Labyrinth ausgeschlossen. Sofern sich im Folienbeutel eine Flüssigkeit befindet, so kann in Abhängigkeit von der Zähigkeit der Flüssigkeit bei Aufbringen eines Drucks auf den Inhalt des Folienbeutels ein Entweichen nicht ausgeschlossen werden. Jedoch kann ohne weiteres bei entsprechender Gestaltung des Labyrinths die Zeitspanne bis zum Entweichen der Flüssigkeit (im Gegensatz zur Luft) derart hoch erzeugt werden, dass bei normaler Handhabung des Folienbeutels rechtzeitig der Druck nachlässt, ohne dass es zu einem Austritt der Flüssigkeit kommt.

Unerheblich für die erfindungsgemäße Ausführungsform ist es hierbei, wenn mit dem Entweichen von Luft zugleich ein unbedeutender Anteil des Beutelinhalts in Form von partikelförmigem Feststoff (Pulver und dergleichen) mit austreten kann. Zumindest wird davon ausgegangen, dass es ohne weiteres möglich ist, das Labyrinth derart zu gestalten, dass nach Entweichen der Luft ein Austritt von Partikeln auch bei einer Druckbelastung auf dem Beutel im Wesentlichen nicht mehr stattfindet.

Besonders vorteilhaft wird hierzu der Folienbeutel mittels des erfindungsgemäßen Verfahrens hergestellt.

In den nachfolgenden Figuren werden beispielhafte Ausführungsformen für eine erfindungsgemäße Siegelvorrichtung und eines Folienbeutels offenbart.

Es zeigen:
- Fig. 1: einen Querschnitt durch eine ersten beispielhaften Ausführungsform einer Schweißbacke einer erfindungsgemäßen Siegelvorrichtung;
- Fig. 2: einen Längsschnitt durch die Schweißbacke gemäß Fig. 1;
- Fig. 3: eine Ansicht auf die Heizelemente der Schweißbacke zu Fig. 1;
- Fig. 4: eine alternative Ausführungsform einer Schweißbacke im Querschnitt;
- Fig. 5: eine weitere Ausführungsform einer Schweißbacke mit Darstellung einer vorteilhaften Erwärmung des Heizelements;
- Fig. 6: ein Beispiel für ein erfindungsgemäßen Folienbeutel mit einer Siegelnaht mit Labyrinth.

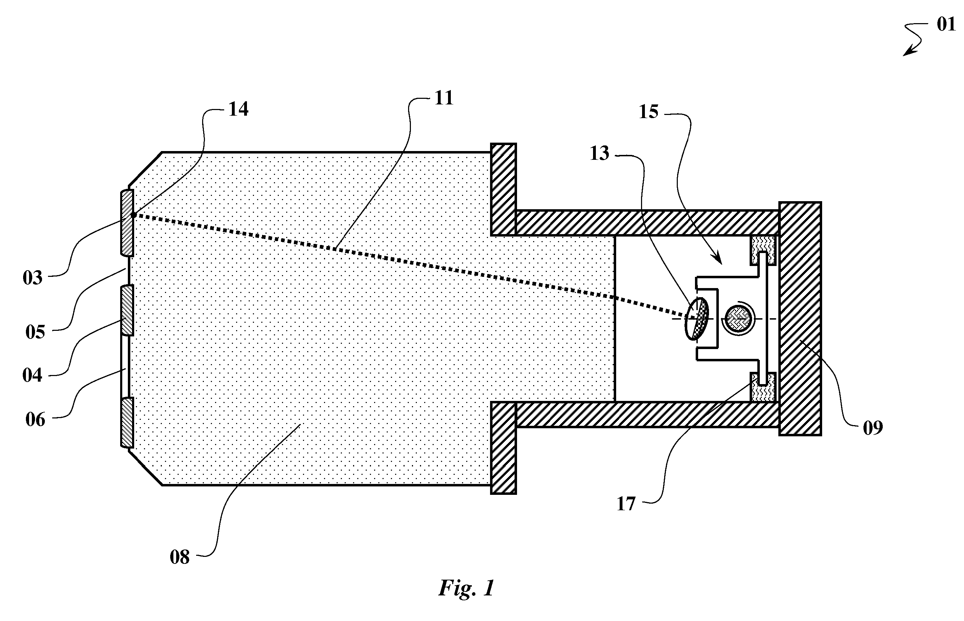

In der **Fig. 1** wird im Querschnitt eine erste beispielhafte Ausführungsform für eine Schweißbacke 01 einer erfindungsgemäßen Siegelvorrichtung skizziert. Zu erkennen sind die auf der zu den Folienabschnitten weisenden Seite angeordneten Heizelemente 03 und 04, wobei diese 03, 04 durch die Aussparung 05 voneinander getrennt sind. Bei der Herstellung von Folienbeuteln mittels der skizzierten beispielhaften Schweißbacke 01 dient das obere Heizelement 03 zur Erzeugung der unteren Siegelnaht des nachlaufenden abzufüllenden Folienbeutels und das untere Heizelement 04 zur Erzeugung der oberen Siegelnaht des vorher laufenden abgefüllten Folienbeutels. Das untere Heizelement 04 weist in diesem Ausführungsbeispiel eine Aussparung 06 für einen Ösenschnitt auf, so dass sich im Querschnitt betrachtet das Heizelement 04 unterhalb der Aussparung fortsetzt. Die Heizelemente 03, 04 weisen jeweils eine sehr geringe Materialstärke auf, so dass lediglich eine geringe zu temperierende Masse vorhanden ist. Die Heizelemente 03, 04 sind an der zu den Folienabschnitten weisenden Seite eines Druckkörpers 08 angebracht. Dieser 08 überträgt hierbei die Druckkräfte ausgehend vom Backenantrieb auf die Heizelemente 03, 04 unter Pressung der zu verschweißenden Folienabschnitte. Hierzu ist der Druckkörper 08 an einem Backenträger 09 befestigt, an dem wiederum der Backenantrieb - nicht dargestellt - angreift.

Erfindungsgemäß ist Druckkörper 08 transparent für den Laserstrahl 11 der eingesetzten Laserquelle 12 ausgeführt. Durch diese besondere Lösung wird es ermöglicht, dass der Druckkörper 08 vom Laserstrahl 11 durchdrungen wird. Im Gegensatz zu bekannten Ausführungen, bei denen es erforderlich ist, den Druckkörper für die Durchleitung des Laserstrahls zu schwächen, kann erfindungsgemäß der Druckkörper 08 die Heizelemente 03, 04 vorteilhaft abstützen, wobei unverändert der Laserstrahl 11 auf die Heizelemente 03, 04 gerichtet werden kann, wobei der Laserstrahl 11 am Auftreffpunkt 14 auf das Heizelement 03, 04 zu einer Erwärmung des Heizelements 03, 04 führt.

Innerhalb der Schweißbacke befindet sich in diesem Ausführungsbeispiel ein über die Breite der Heizelemente 03, 04 entlang einer Führungsbahn 17 verstellbarer Spiegelträger 15. Am Spiegelträger 15 ist ein Umlenkspiegel 13 um eine Querachse (senkrecht zur Zeichnungsebene) parallel zur Führungsbahn 17 schwenkbar gelagert. Durch den verstellbaren Spiegelträger 15 nebst schwenkbaren Umlenkspiegel 13 wird die Ausrichtung des Laserstrahls 11 ausgehend von der Laserquelle 12 auf die gesamte zum Druckkörper 08 weisende Oberfläche der beiden Heizelemente 03, 04 ermöglicht.

Besonderes Merkmal dieses Ausführungsbeispiels ist es, dass weiterhin abseits der Heizelemente 03, 04 im Bereich der Aussparungen 05 und 06 eine direkte Bestrahlung der Folienabschnitte ermöglicht wird. Dieses ermöglicht ein Laserschneiden der überlappenden Folienabschnitte, wodurch ohne zusätzliches Werkzeug ein Trennen des abgefüllten Folienbeutels vom abzufüllenden Folienbeutel sowie ein Ausschneiden einer Öse am oberen Beutelrand ermöglicht wird.

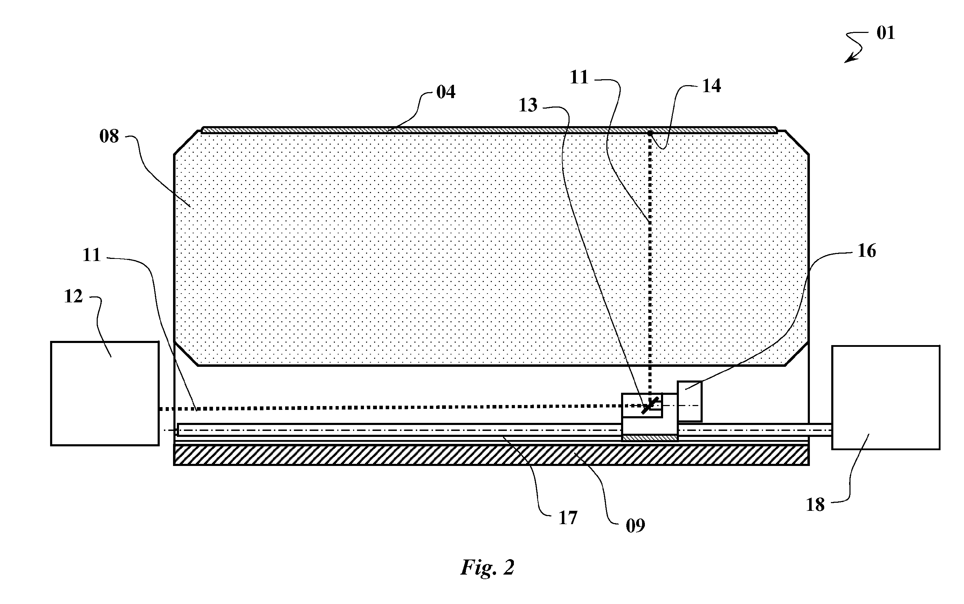

In **Fig. 2** skizziert schematisch im Längsschnitt die Ausführungsform der Schweißbacke 01 aus Fig. 1. Zu erkennen ist wiederum der Druckkörper 08, an dessen 08 zu den Folienabschnitten weisenden Seite die Heizelemente 03, 04 angeordnet sind. Der Laserstrahl 11 wird von der Laserquelle 12 in Richtung der Querachse ausgestrahlt und sodann durch den Umlenkspiegel 13 auf das Heizelement 03, 04 umgelenkt und trifft am Auftreffpunkt 14 auf das Heizelement 03, 04 auf. Die Positionierung des Auftreffpunkts auf einem der beiden Heizelemente sowie die direkte Ausrichtung auf die Folienabschnitte abseits der Heizelemente 03, 04 wird zum einen über die Breite der Heizelemente 03, 04 durch den verstellbaren Spiegelträger 15 ermöglicht, welcher hierzu an der Führungsbahn 17 verschiebbar gelagert ist und von einem Stellantrieb 18 positioniert werden kann. Die Positionierung über die Höhe der Schweißbacke, d.h. senkrecht zur Zeichenebene, wird realisiert durch ein Schwenken des Umlenkspiegels 13 am Spiegelträger 15 mittels der Spiegelverstellung 16.

Durch Ausrichtung und Umlenkung des Laserstrahls 11 kann in diesem Ausführungsbeispiel sowohl die Laserquelle 12 als auch der Stellantrieb 18 ortsfest an der Schweißbacke 01 angebracht werden, während hingegen der Spiegelträger 15 sowie daran der Umlenkspiegel 13 verstellbar sind. Somit bedarf es lediglich der Bewegung geringer Massen zur Überdeckung der gesamten Fläche der Heizelemente 03, 04 und der Aussparungen 05, 06 durch den Laserstrahl 11.

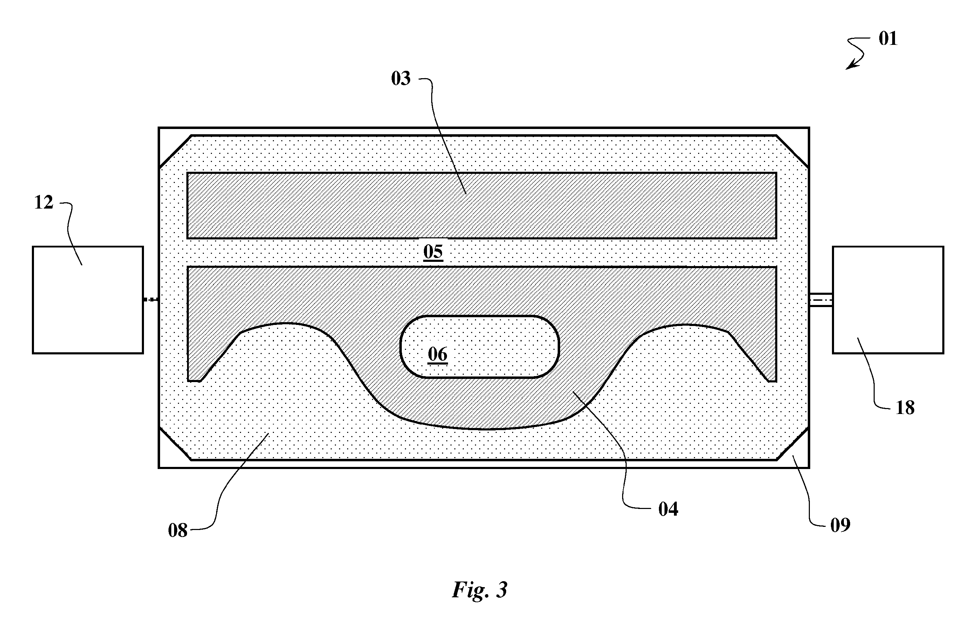

Die Gestaltung der Heizelemente 03, 04 kann aufgrund des erfindungsgemäß für die Laserstrahlen 11 durchlässigen Druckkörpers 08 weitgehend beliebig anhand der Erfordernisse der gewünschten Schweißnaht am herzustellenden Folienbeutel erfolgen, wobei in diesem Ausführungsbeispiel - wie in Fig. 3 - skizziert, das obere Heizelement 03 als waagrechter Balken über die Breite des zu verschweißenden Folienabschnitts ausgebildet ist. Hingegen ist das durch die Aussparung 05 für einen Trennschnitt unterteilte untere Heizelement 04 entsprechend einer typischen Beutelform mit einer Öse geformt, wobei zum Ausschneiden der Öse innerhalb des unteren Heizelements 04 eine Aussparung 06 vorhanden ist. Somit kann durch die vorteilhafte Ausführungsform der Heizelemente 03, 04 neben dem Verschweißen der Folienabschnitte zugleich ein Trennen der Folienabschnitte bei der Aussparung 05 sowie ein Ausschnitt der Öse in der Aussparung 06 mittels Laserstrahl vorgenommen werden.

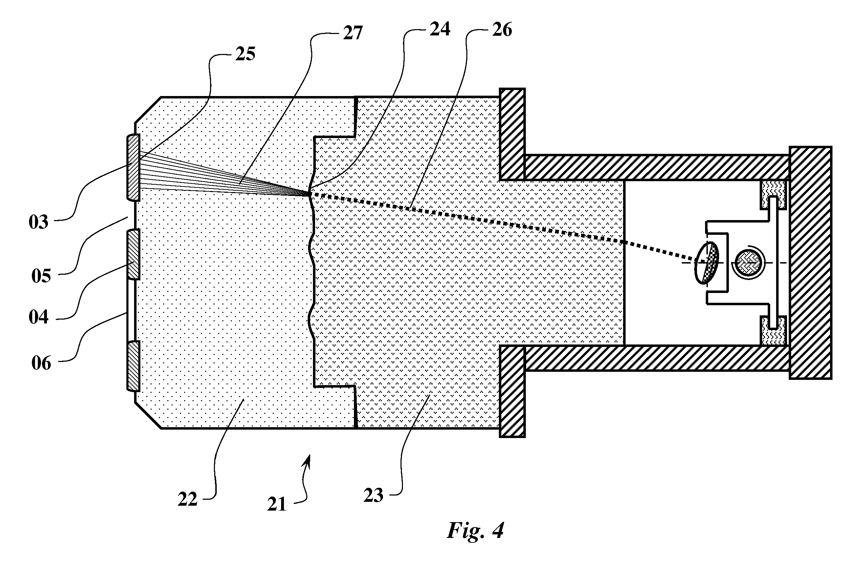

In Abhängigkeit von der vorgesehenen Spiegelverstellung, beispielsweise durch den Umlenkspiegel 13 sowie in Abhängigkeit von der Erwärmung des Heizelements 03, 04 durch den Laserstrahl 11, kann es erforderlich werden bzw. vorteilhaft sein, wenn der Laserstrahl 11 vor dem Auftreffen auf das Heizelement 03, 04 aufgeweitet wird. Hierzu bietet sich vorteilhaft die Verwendung einer Streulinse 24 an. Hierzu zeigt die **Fig. 4** eine beispielhafte Ausführungsform, bei der der Druckkörper 21 aus zwei verschiedenen Materialien 22, 23 hergestellt wird, wobei aufgrund unterschiedlicher Lichtbrechung der beiden verwendeten Materialien bei entsprechender Formgebung eine Linse 24 realisierbar wird. Dieses führt zur Aufweitung des zuvor gebündelten Laserstrahls 26 zum aufgeweiteten Laserstrahl 27. Somit vergrößert sich entsprechend auch der Auftreffpunkt 25 im Gegensatz zur vorherigen Ausführungsform mit kleinem Auftreffpunkt 14, wobei der Auftreffpunkt 25 in diesem Beispiel eine Ellipsenform annimmt.

Alternativ zum dargestellten Beispiel kann die Aufweitung des Laserstrahls 11 durch die Verwendung einer am Spiegelträger angeordneten Streulinse erfolgen.

Ebenso ist es alternativ zur Verwendung einer Streulinse - oder einer Blende - möglich, den Umlenkspiegel gewölbt zu formen, so dass eine zusätzliche Linse hinfällig ist.

Die Alternativen Ausführungen mit einer Streulinse am Spiegelträger und/oder einem gewölbtem Umlenkspiegel bietet sich insbesondere in den Fällen an, bei denen auf eine Schwenkbarkeit des Umlenkspiegels verzichtet wird und insbesondere zur Aufheizung zweier paralleler Heizelemente zwei Laserquellen mit zwei parallel verlaufenden Laserstrahlen zugleich eingesetzt werden.

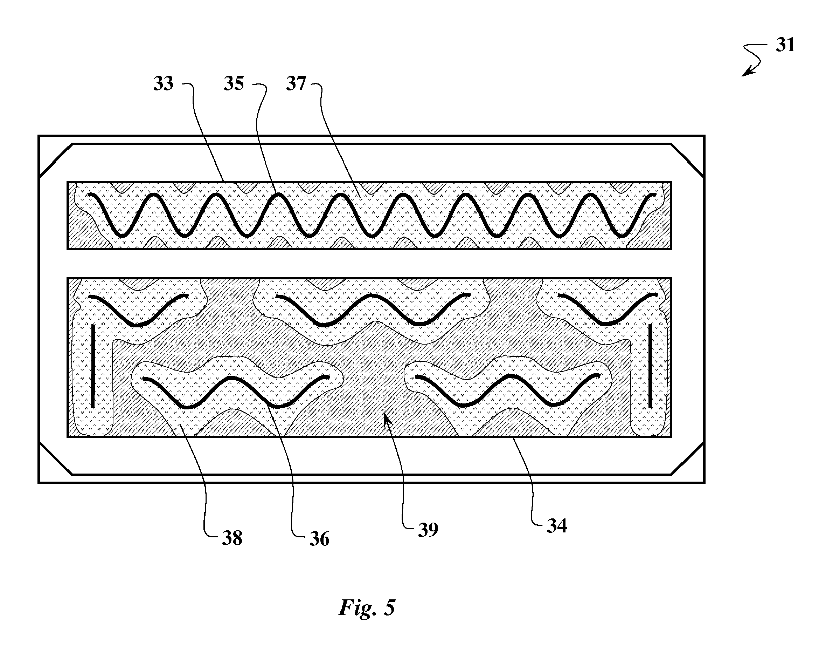

Die Verwendung eines Heizelements (33, 34) geringer Dicke und deren Erwärmung mittels eines verstellbaren Laserstrahls eröffnet eine neue erfindungsgemäße Verfahrensweise, deren Ergebnis beispielhaft in der Fig. 5 skizziert ist. Zu erkennen ist analog der Fig. 3 die Schweißbacke 31, welche ein oberes Heizelement 33 und eine unteres Heizelement 34 aufweist. Ein beispielhafter Verlauf für den Auftreffpunkt am oberen Heizelement 33 skizziert die Kurve 35, wobei deren Verlauf zur einer zum Verschweißen der überlappenden Folienabschnitte relevanten Erwärmung in einer oberen Wärmeeinflusszone 37 führt. Analog führt der untere Verlauf 36 des Auftreffpunktes auf das untere Heizelement 34 zu einer den unteren Verlauf 36 umgebenden unteren Wärmeeinflusszone 38. Wenngleich mit der erfindungsgemäßen Ausführung die obere Siegelnaht gleichartig zur unteren Siegelnaht ausgeführt werden könnte, wird in dieser besonderen Ausführungsvariante der untere Verlauf 36 des Auftreffpunktes in mehrere Abschnitte unterteilt, so dass mehrere beabstandete untere Wärmeeinflusszonen und ein dazwischen liegender nicht erhitzter Bereich 39 beim unteren Heizelement entsteht. Durch die Steuerung der Positionierungsmittel zur Lenkung des Laserstrahls unter Veränderung des Strahlengangs ist somit eine Art Labyrinth hinsichtlich des nicht erwärmten Bereichs in Abgrenzung zur unteren mehrteiligen Wärmeeinflusszone realisierbar.

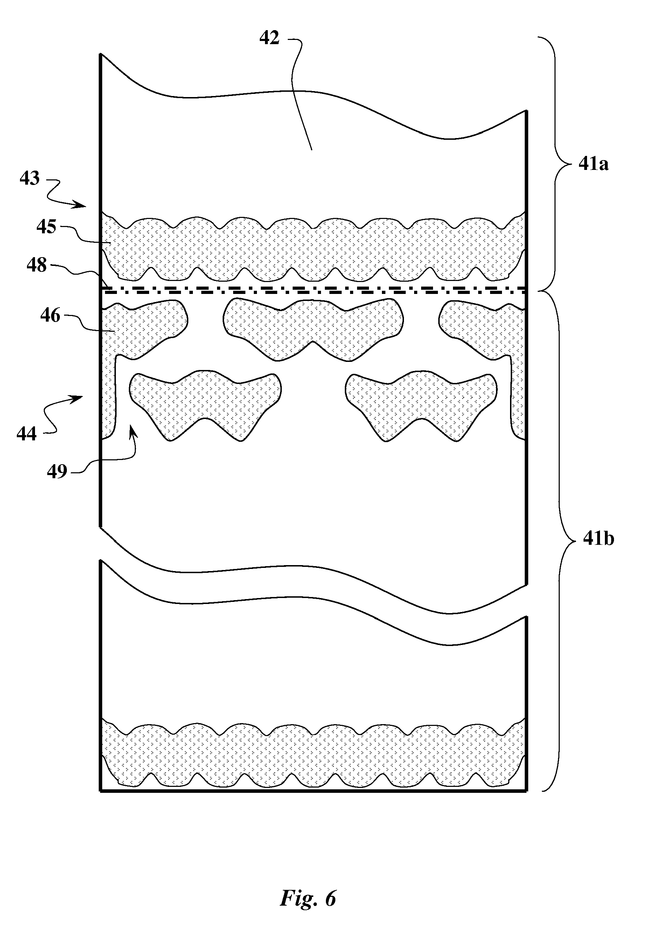

In der **Fig. 6** wird eine neu geschaffene Ausführungsform eines Folienbeutels 41a, 41b skizziert, wobei dieser 41 - wie zunächst üblich - aus einem Folienschlauch 42 hergestellt ist. Ob es sich bei dem Folienschlauch 42 um einen extrudierten Folienschlauch oder um einen durch Umformung und Längssiegeln gebildeten Folienschlauch handelt, ist erfindungsgemäß zunächst ohne Belang. Zumindest weist der Folienbeutel 41 am unteren Folienbeutelrand 43 - wie üblich - eine untere luftdicht verschweißte Siegelnaht 45 auf. Ebenso ist gattungsgemäß am oberen Folienbeutelrand 44 eine obere zumindest abschnittsweise luftdichte Siegelnaht 46 vorhanden, deren 46 Gestalt sich im Stand der Technik nach der Gestalt des Heizelements der zugehörigen Schweißbacke richtet und üblicherweise wie die untere Siegelnaht 45 im Wesentlichen durchgehend luftdicht ausgeführt ist.

Erfindungsgemäß wird die obere Siegelnaht 46 nunmehr jedoch in mehrere zueinander beabstandete Bereiche aufgeteilt, wobei ein sich vom Beutelinneren bis nach außen erstreckender nicht verschweißter Bereich 49 zwischen der aus den mehreren Bereichen gebildeten oberen Siegelnaht 46 vorhanden ist. Dieser nicht verschweißte Bereich ist hierbei in der Gestalt eines Labyrinths 49 geformt.

Diese besondere Form der oberen Siegelnaht 46 mit dem zwischen liegenden Labyrinth 49 ermöglicht ein Entweichen von Luft aus dem Beutelinneren, während hingegen der Beutelinhalt im Beutel zurück gehalten werden kann.

## Patentansprüche

1. Siegelvorrichtung zum Verschweißen zweier überlappender Folienabschnitte mit einer Schweißbacke (01, 31), welche (01, 31) zumindest einen Druckkörper (08, 21) und zumindest ein auf der zu den Folienabschnitten weisenden Seite am Druckkörper (08, 21) angeordnetes Heizelement (03, 04, 33, 34) umfasst, und mit einem Widerstand, wobei die Schweißbacke (01, 31) mittels eines Backenantriebs unter Pressung der Folienabschnitte auf den Widerstand zu- und davon wegbewegt werden kann, und mit einer Heizeinrichtung, welche zumindest eine Laserstahl (11, 26, 27) emittierende Laserquelle (12) und das Heizelement (03, 04, 33, 34) umfasst, wobei das Heizelement (03, 04, 33, 34) den Laserstrahl (11, 27) absorbieren kann und hierdurch in einem Auftreffpunkt (14, 25) erwärmt werden kann,
**dadurch gekennzeichnet,**
**dass** der Druckkörper (08, 21) für den Laserstrahl (11, 26, 27) transparent ist und im Strahlengang des Laserstrahls (11, 26, 27) angeordnet ist.

2. Siegelvorrichtung nach Anspruch 1,
**dadurch gekennzeichnet,**
**dass** das Widerstandselement gegenläufig auf die Schweißbacke (01, 31) zu- und davon wegbewegt werden kann und/oder dass die Siegelvorrichtung zwei gegenläufig aufeinander zu- und voneinander wegbewegbare Schweißbacken (01, 31) umfasst, welche jeweils (01, 31) zumindest ein erwärmbares Heizelement (03, 04, 33, 34), und insbesondere zumindest einen für Laserstrahlen (11, 26, 27) transparenten Druckkörper (08, 21), aufweisen.

3. Siegelvorrichtung nach Anspruch 1 oder 2,
**dadurch gekennzeichnet,**
**dass** die Wärmeleitfähigkeit des Heizelements (03, 04, 33, 34) zumindest um den Faktor 10, insbesondere zumindest um den Faktor 20, höher ist als die Wärmeleitfähigkeit des Druckkörpers (08, 21).

4. Siegelvorrichtung nach einem der Ansprüche 1 bis 3,
**dadurch gekennzeichnet,**
**dass** die Materialstärke des Heizelements (03, 04, 33, 34) geringer als 2 mm, insbesondere geringer als 0,5 mm ist.

5. Siegelvorrichtung nach einem der Ansprüche 1 bis 4,
**dadurch gekennzeichnet,**
**dass** der Auftreffpunkt (14, 25) mittels einer Positionierungseinrichtung (16, 18) verstellbar ist, welche (16, 18) die Position und/oder die Ausrichtung der Laserquelle (12) und/oder den Strahlengang des Laserstrahls (11, 26, 27) beeinflussen kann.

6. Siegelvorrichtung nach Anspruch 5,
**dadurch gekennzeichnet,**
**dass** die Positionierungseinrichtung (16, 18) einen schwenkbar und/oder verschiebbar an der Schweißbacke (01, 31) gelagerten Umlenkspiegel (13) umfasst; und/oder dass die Positionierungseinrichtung ein schwenkbar und/oder verschiebbar an der Schweißbacke gelagertes Umlenkprisma umfasst.

7. Siegelvorrichtung nach Anspruch 5 oder 6,
**dadurch gekennzeichnet,**
**dass** die Laserquelle mittels der Positionierungseinrichtung schwenkbar und/oder verschiebbar an der Schweißbacke gelagert ist.

8. Siegelvorrichtung nach einem der Ansprüche 1 bis 7,
**dadurch gekennzeichnet,**
**dass** im Strahlengang vor dem Druckkörper und/oder im Druckkörper eine Streulinse und/oder Blende angeordnet ist und/oder der Druckkörper eine Streulinse bildet, wodurch der Laserstrahl aufgeweitet wird.

9. Siegelvorrichtung nach einem der Ansprüche 1 bis 8,
**dadurch gekennzeichnet,**
**dass** die Schweißbacke (01, 31) zumindest ein oberes Heizelement (03, 33) und ein beabstandetes unteres Heizelement (04, 34) aufweist, welche (03, 04, 33, 34) insbesondere zusammen am Druckkörper (08, 21) angeordnet sind.

10. Siegelvorrichtung nach einem der Ansprüche 1 bis 9,
**dadurch gekennzeichnet,**
**dass** der Druckkörper (08, 21) das Heizelement (03, 04, 33, 34) seitlich überragt und/oder dass das Heizelement (04) Aussparungen (06) aufweist, welche (06) vom Druckkörper (08, 21) überdeckt werden, wobei der Laserstrahl (11, 26, 27) durch den Druckkörper (08, 21) abseits des Heizelements (03, 04, 33, 34) direkt auf die Folienabschnitte gelenkt werden kann.

11. Siegelvorrichtung nach einem der Ansprüche 1 bis 10,
**dadurch gekennzeichnet,**
**dass** der Druckkörper eine Kühleinrichtung, insbesondere Fluid führende Kühlmittelkanäle, umfasst.

12. Siegelvorrichtung nach einem der Ansprüche 1 bis 11,
**dadurch gekennzeichnet,**
**dass** eine Temperaturmesseinrichtung eine Temperatur des Heizelements (03, 04, 33, 34) ermitteln kann, wobei die Temperaturmesseinrichtung einen in der Schweißbacke (01, 31) angeordneten temperaturabhängigen elektrischen Widerstand und/oder ein Wärmestrahlungsmessgerät umfasst.

13. Siegelvorrichtung nach einem der Ansprüche 1 bis 12,
**dadurch gekennzeichnet,**
**dass** die Heizeinrichtung eine Mehrzahl Laserquellen umfasst, wobei die Auftreffpunkte der jeweiligen Laserstrahlen auf das Heizelement verteilt über die Breite des Heizelements angeordnet sind und/oder das bei zumindest zwei beabstandeten Heizelementen jedes Heizelement zumindest eine zugehörige Laserquelle mit zugehörigem Laserstrahl aufweist.

14. Verfahren zum Siegeln von überlappenden Folienabschnitten, wobei mittels zumindest einer Laserquelle (12) ein Laserstrahl (11, 26, 27) erzeugt wird, welcher (11, 26, 27) in einem Auftreffpunkt (14, 25) auf zumindest ein Heizelement (03, 04, 33, 34) auftrifft und das Heizelement (03, 04, 33, 34) lokal erwärmt, wobei der Strahlengang des Laserstrahls (11, 26, 27) mittels einer Positionierungseinrichtung (16, 18) während des Siegelvorganges fortlaufend verändert wird,
**gekennzeichnet durch**
die Verwendung einer Siegelvorrichtung gemäß einem der vorhergehenden Ansprüche.

15. Verfahren nach Anspruch 14,
**dadurch gekennzeichnet,**
**dass** die Laserquelle intermittierend bei fortschreitender Verstellung des Strahlengangs durch die Positionierungseinrichtung betrieben wird, wobei sich der Verlauf des Auftreffpunktes in mehrere beabstandete Abschnitte unterteilt, wodurch beabstandete erhitzte Bereiche am Heizelement entstehen, wobei insbesondere die nicht erhitzten Bereiche des Heizelements eine Art Labyrinth bilden.

16. Folienbeutel, hergestellt aus einem längsverschweißten oder extrudierten Folienschlauch mit einer unteren, den Folienbeutel luftdicht verschließenden Siegelnaht und einer oberen, den Folienbeutel zumindest abschnittsweise luftdicht verschließenden Siegelnaht,
**dadurch gekennzeichnet,**
**dass** die obere Siegelnaht in mehrere beabstandete Abschnitte unterteilt ist und der nicht verschweißte zwischenliegende Bereich eine Art Labyrinth bildet, wodurch aus dem Folienbeutel Luft, jedoch nicht Feststoffe und Flüssigkeiten nur unter erhöhtem Beutelinnendruck entweichen können.

17. Folienbeutel, hergestellt nach dem Verfahren gemäß Anspruch 15.
